# EUROPEAN PATENT APPLICATION

(11) **EP 4 418 360 A1**
(43) Date of publication of application: **21.08.2024**
(21) Application number: 23798877.9
(22) Date of filing: 29.08.2023
(51) Int. Cl.: H01M 4/525, H01M 4/505, H01M 4/62

(54) **POSITIVE ELECTRODE MATERIAL AND PREPARATION METHOD THEREFOR, POSITIVE ELECTRODE SHEET, BATTERY, AND ELECTRIC DEVICE**

(30) Priority: 28.12.2022 CN 202211707833
(71) Applicant: Tianjin B&M Science And Technology Co., Ltd., Tianjin 300384 (CN)
(72) Inventor: LV, Fei, Tianjin 300384 (CN); CHEN, Dexian, Tianjin 300384 (CN); XU, Ning, Tianjin 300384 (CN); WU, Mengtao, Tianjin 300384 (CN)
(74) Representative: Gill Jennings & Every LLP
(86) International application number: PCT/CN2023/115490
(87) International publication number: WO 2024/139323

(57) **Abstract**

This application provides a cathode material, a method for preparing the same, a positive electrode plate, a battery, and an electrical device. The cathode material includes a ternary cathode bulk and a coating layer disposed on a surface of the ternary cathode bulk. The coating layer includes a component represented by LiXₐO_{(2-b)}F_{b}, wherein X represents at least one of Ni, Co, Mn, Al, B, Y, Zr, Sr, La, Ti, Mg, Zn, Fe, Nb, Ge, W, or Ce; and 0<a<6, 0<b≤1.

## Description

### CROSS-REFERENCE TO RELATED APPLICATIONS

This application claims priority to Chinese patent application No. 202211707833.2, filed on December 28, 2022, and titled "CATHODE MATERIAL, METHOD FOR PREPARING THE SAME, POSITIVE ELECTRODE PLATE, BATTERY, AND ELECTRICAL DEVICE", the contents of which is hereby incorporated by reference in its entirety.

### TECHNICAL FIELD

The present disclosure relates to the technical field of batteries, in particular to a cathode material, a method for preparing the same, a positive electrode plate, a battery, and an electrical device.

### BACKGROUND

Batteries such as lithium-ion batteries possess characteristics of high capacity, high voltage, high temperature resistance, light weight, etc., and thus have been widely used in various fields, including electric vehicles, aerospace, energy storage devices, data products, etc.

Cycle life performance of batteries is an important indicator for evaluating the performance of secondary batteries and materials thereof. The cathode material in the battery is a decisive factor. In current cathode material systems, ternary materials are widely used due to their advantages such as high specific energy density and good cycling performance. However, as the number of charge-discharge cycles increases, especially in an extreme application environment, the batteries made from conventional ternary materials exhibit greatly attenuated cycling performance, mainly due to following factors: (1) Unit cells of the ternary material after delithiation show a significant shrinkage in repeating charge-discharge processes, especially in an extreme environment, which results in continuous crack growth at grain boundaries, and causes collapse and decay in the crystal structure; and (2) the cathode reacts with the electrolyte at the interface in repeating charge-discharge processes, which causes metal dissolution from the surface of the cathode material, results in reconstruction of crystal lattice in the surface layer of the cathode material, and forms a rock-salt phase and a spinel phase which are inactive, thereby adversely affecting the structure and cycling performance of the cathode material. For example, when the ternary cathode material is in a charge state, the highly oxidizing Ni⁴⁺ elements react with the electrolyte, leading to continuous dissolution of transition metal elements at an interface where the cathode is in contact with the electrolyte, and forming an inactive NiO rock-salt phase or an inactive spinel phase at the interface, which in turn exerts a negative impact on the cycling performance of the batteries.

Currently, cathode materials are usually subjected to surface coating to reduce the probability of contact between the cathode material and the electrolyte, and to improve the cycling performance of the batteries. However, the coating layer formed by conventional coating methods has low interfacial bonding force, poor mechanical performance, and limited improvement on cycling performance of the batteries. Therefore, increasing demands on performances of batteries cannot be met.

### SUMMARY

In view of the above, the present disclosure provides a cathode material, a method for preparing a cathode material, a positive electrode plate, a battery, and an electrical device.

In an aspect of the present disclosure, provided is a cathode material. The cathode material includes a ternary cathode bulk and a coating layer disposed on a surface of the ternary cathode bulk. The coating layer includes a component represented by LiXₐO_{(2-b)}F_{b}, wherein X represents at least one of Ni, Co, Mn, Al, B, Y, Zr, Sr, La, Ti, Mg, Zn, Fe, Nb, Ge, W, or Ce; and 0<a<6, 0<b≤1.

In some embodiments, 1≤a<1.2.

In some embodiments, a thickness of the coating layer is in a range from 5 nm to 200 nm.

In some embodiments, the coating layer includes a composite of a metal fluoride, a metal oxide, and a spinel phase compound.

In some embodiments, a metal element in the metal fluoride includes at least one of Ni, Co, Mn, Al, B, Y, Zr, Sr, La, Ti, Mg, Zn, Fe, Nb, Ge, W, or Ce.

In some embodiments, the metal fluoride is represented by Tₐ₁F, wherein T represents at least one of Ni, Co, Mn, Al, B, Y, Zr, Sr, La, Ti, Mg, Zn, Fe, Nb, Ge, W, or Ce, and 0<a1≤1.

In some embodiments, a metal element in the metal oxide includes at least one of Ni, Co, Mn, Al, B, Y, Zr, Sr, La, Ti, Mg, Zn, Fe, Nb, Ge, W, or Ce.

In some embodiments, the metal oxide is represented by L_{b1}O, wherein L represents at least one of Ni, Co, Mn, Al, B, Y, Zr, Sr, La, Ti, Mg, Zn, Fe, Nb, Ge, W, or Ce, and 0<b1≤2.

In some embodiments, the spinel phase compound is represented by LiX1_{c1}Q1_{d1}O₄, wherein 0≤c1≤1, 0≤d1≤2; if c1 is 0, d1 is not 0, and if d1 is 0, c1 is not 0; Q1 and X1 are each independently at least one selected from Ni, Co, Mn, Al, B, Y, Zr, Sr, La, Ti, Mg, Zn, Fe, Nb, Ge, W, or Ce.

In some embodiments, the coating layer includes a sub-surface layer adjacent to the ternary cathode bulk, and a surface layer away from the ternary cathode bulk. The sub-surface layer substantially includes the spinel phase compound. The surface layer substantially includes the metal fluoride.

The sub-surface layer adjacent to the ternary cathode bulk substantially includes the spinel phase compound. The spinel phase compound can act as a buffer layer to absorb stress accumulated in the crystal lattice of the cathode material and inhibit crack growth in crystal grains.

In some embodiments, the ternary cathode bulk is represented by LiNiₓCo_{y}M_{(1-x-y)}O₂, wherein 0<x<1, 0<y<1, 0<x+y<1, and M represents at least one of Mn, Al, B, Y, Zr, Sr, La, Ti, Mg, Zn, Fe, Nb, Ge, or Ce.

In some embodiments, a particle size of the ternary cathode bulk is in a range from 3 µm to 15 µm.

In another aspect of the present disclosure, provided is a method for preparing a cathode material. The method includes the following steps:
(1) mixing a fluorine-containing compound, an oxide, an acidic compound, and a solvent to obtain an etching agent;
(2) pre-etching by mixing the etching agent with a ternary cathode bulk to obtain a pre-etched mixture material; and
(3) etching by sintering the pre-etched mixture material to obtain the cathode material.

In some embodiments, the fluorine-containing compound includes one or more of hydrofluoric acid, ammonium fluoride, nickel fluoride, cobalt fluoride, manganese fluoride, lithium fluoride, zirconium fluoride, yttrium fluoride, aluminum fluoride, titanium fluoride, tungsten fluoride, boron fluoride, strontium fluoride, lanthanum fluoride, magnesium fluoride, or cerium fluoride.

In some embodiments, the solvent includes one or more of deionized water, methanol, ethanol, acetone, or ethylene glycol.

In some embodiments, the oxide includes one or more of aluminum oxide, titanium oxide, magnesium oxide, zirconium oxide, tungsten oxide, strontium oxide, yttrium oxide, boron oxide, lanthanum oxide, cerium oxide, or germanium oxide.

In some embodiments, the acidic compound includes one or more of boric acid, acetic acid, phosphoric acid, hydrofluoric acid, oxalic acid, ethanedioic acid, ammonium dihydrogen phosphate, ammonium hydrogen phosphate, hydrogen sulfide, sulfuric acid, or ammonium tungstate.

In some embodiments, the solvent includes one or more of water, methanol, ethanol, acetone, or ethylene glycol.

In some embodiments, a mass ratio of the ternary cathode bulk, the fluorine-containing compound, the oxide, and the acidic compound is 1: (0.005 to 0.5): (0.001 to 0.1): (0.01 to 10).

In some embodiments, a time period for the pre-etching is in a range from 5 minutes to 200 minutes.

In some embodiments, a temperature for the pre-etching is in a range from 10°C to 40°C.

In some embodiments, a time period for the etching is in a range from 5 hours to 30 hours.

In some embodiments, a temperature for the etching is in a range from 40°C to 1000°C.

In some embodiments, the etching is performed in an oxygen-containing atmosphere.

In some embodiments, the step of obtaining the etching agent includes:
mixing the fluorine-containing compound, the metal oxide, the acidic compound, and the solvent to obtain a mixture;
adjusting a pH value of the mixture to be in a range from 4 to 7 depending on a type or an addition amount of the acidic compound; and
performing drying to obtain the etching agent.

In a further aspect of the present disclosure, provided is a positive electrode plate. The positive electrode plate includes a current collector, and a cathode active layer disposed on a surface of the current collector. The cathode active layer includes the cathode material as described above, or the cathode material prepared by the method for preparing a cathode material as described above.

In a further aspect of the present disclosure, provided is a battery. The battery includes the cathode material as described above, the cathode material prepared by the method for preparing a cathode material as described above, or the positive electrode plate as described above.

In a still further aspect of the present disclosure, provided is an electrical device. The electrical device includes the battery as described above.

The details of one or more embodiments of the present disclosure are set forth with reference to the accompanying drawings and description below. Other features, objects, and advantages of the present disclosure will become apparent from the description, accompanying drawings and claims.

### BRIEF DESCRIPTION OF THE DRAWINGS

FIG. 1 shows a scanning electron microscopy (SEM) image of a cathode material prepared in Example 1 of the present disclosure.
FIG. 2 shows an energy dispersive spectroscopy (EDS) image of the cathode material prepared in Example 1 of the present disclosure.
FIG. 3 shows a transmission electron microscopy (TEM) image of the cathode material prepared in Example 1 of the present disclosure.
FIG. 4 shows a comparison graph of cycling performance at 45°C of batteries prepared in Example 1, Example 2, Comparative Example 1, Comparative Example 2, and Comparative Example 5 of the present disclosure.
FIG. 5 shows a flow chart of a method for preparing a cathode material according to embodiments of the present disclosure.

### DETAILED DESCRIPTION

The present disclosure will be described more comprehensively below in order to facilitate understanding of the present disclosure, and preferred embodiments of the present disclosure are set forth. However, the present disclosure may be implemented in many different forms and is not limited to the embodiments described herein. In contrast, the specific embodiments provided herein are only for understanding the disclosure of the present application more thorough and comprehensive.

Unless otherwise defined, all technical and scientific terms used herein have the same meaning as those normally understood by those of ordinary skill in the art. The terms used herein in the specification of the present disclosure are for the purpose of describing specific embodiments only and are not intended to limit the present disclosure. The term "and/or" as used herein includes any or all combinations of one or more relevant listed items.

A numerical range, when disclosed herein, is deemed to be a continuous range, and includes the minimum value and the maximum value of the range, as well as every value between the minimum value and the maximum value. Further, when the range refers to integers, every integer between the minimum value and the maximum value of the range is included. In addition, when multiple ranges are provided to describe a feature or a characteristic, they can be combined. In other words, unless otherwise indicated, all ranges disclosed herein are to be understood to include any or all sub-ranges subsumed therein.

In the conventional technology, cathode materials are usually subjected to surface coating such as liquid phase impregnation coating or direct solid phase sintering coating by using metal oxides as coating materials to reduce the probability of contact between the cathode materials and the electrolytes and improve cycling performance of the batteries.

However, the oxide coating layer can be easily corroded by hydrofluoric acid (HF) generated in the electrolyte, which forms a new heterogeneous interface and thus cannot improve the long-term cycling performance. Besides, there is merely a physical interaction force existed at the interface between the coating layer, formed through the liquid phase impregnation coating or the direct solid phase sintering coating, and the cathode bulk, which is a weak interface bonding force, resulting in poor mechanical strength of the interface and limited improvement on cycling performance of the batteries.

In view of the above, some embodiments of the present disclosure provide a cathode material, a method for preparing a cathode material, a positive electrode plate, a battery, and an electrical device for improving high-temperature storage performance and cycling performance of the batteries.

Some embodiments of the present disclosure provide a cathode material. The cathode material includes a ternary cathode bulk, and a coating layer disposed on a surface of the ternary cathode bulk. The coating layer includes a component represented by LiXₐO_{(2-b)}F_{b}, wherein X represents at least one of Ni, Co, Mn, Al, B, Y, Zr, Sr, La, Ti, Mg, Zn, Fe, Nb, Ge, W, or Ce; and 0<a<6, 0<b≤1.

In some embodiments, 1≤a<1.2. Thus, the coating effect and stability are further enhanced, thereby improving the high-temperature storage performance and cycling performance of the batteries.

In some embodiments, a is in a range from 0.79 to 0.86. For example, a can be 0.79, 0.80, 0.81, 0.82, 0.83, 0.84, 0.85, or 0.86. Thus, the coating effect and stability are further enhanced, thereby improving the high-temperature storage performance and cycling performance of the batteries.

The cathode material of the present disclosure includes the ternary cathode bulk and the coating layer disposed on the surface of the ternary cathode bulk. The coating layer includes the specific components, which can prevent the formation of an inactive rock-salt phase, an inactive spinel phase, and other lattice distorted heterogeneous substances from further reactions between the ternary cathode bulk in the cathode material and the electrolyte. Meanwhile, fluorine atoms in the coating layer have a strong electron-attraction property, so that the transition metal atoms in the coating layer can make charge compensation for the fluoride, forming enhanced "metal-metal" bond energy to improve the interfacial bonding force of the coating layer. When being used to prepare batteries, this cathode material can inhibit the interface contact reaction between the cathode and the electrolyte, reduce lattice defects due to the dissolution of transition metal elements from the cathode material, decrease the direct-current resistance (DCR) in the cycling, and thus improve the high-temperature storage performance and cycling performance of the batteries.

In some embodiments, a thickness of the coating layer is in a range from 5 nm to 200 nm.

The thickness of the coating layer is adjusted to further enhance the coating effect and stability, thereby improving the cycling performance of the batteries.

If the coating layer is too thin, the doping amount may be insufficient, which may result in a poor coating effect and cannot effectively inhibit the crack growth at grain boundaries of the cathode material. However, if the coating layer is too thick, the phase interface of the cathode material may be unstable, or new heterogeneous phases may be generated, which hinders the optimal electrochemical performance of the cathode material.

In some embodiments, a thickness of the coating layer is in a range from 5 nm to 50 nm.

It should be noted that the "5 nm to 200 nm" can refer to a numerical range from 5 nm to 200 nm. The numerical range is regarded as a continuous range, and includes the minimum value and the maximum value of the range, as well as every value between the minimum value and the maximum value. For example, the numerical range includes but is not limited to 5 nm, 10 nm, 30 nm, 50 nm, 80 nm, 120 nm, 140 nm, 160 nm, 180 nm, or 200 nm.

In some embodiments, the coating layer includes a composite of a metal fluoride, a metal oxide, and a spinel phase compound.

In some embodiments, a metal element in the metal fluoride includes at least one of Ni, Co, Mn, Al, B, Y, Zr, Sr, La, Ti, Mg, Zn, Fe, Nb, Ge, W, or Ce.

In some embodiments, the metal fluoride is represented by Tₐ₁F, wherein T represents at least one of Ni, Co, Mn, Al, B, Y, Zr, Sr, La, Ti, Mg, Zn, Fe, Nb, Ge, W, or Ce, and 0<a1≤1.

In some embodiments, a metal element in the metal oxide includes at least one of Ni, Co, Mn, Al, B, Y, Zr, Sr, La, Ti, Mg, Zn, Fe, Nb, Ge, W, or Ce.

In some embodiments, the metal oxide is represented by L_{b1}O, wherein L represents at least one of Ni, Co, Mn, Al, B, Y, Zr, Sr, La, Ti, Mg, Zn, Fe, Nb, Ge, W, or Ce, and 0<b1≤2.

In some embodiments, the spinel phase compound is represented by LiX1_{c1}Q1_{d1}O₄, wherein 0≤c1≤1, 0≤d1≤2; if c1 is 0, d1 is not 0, and if d1 is 0, c1 is not is 0; Q1 and X1 are each independently at least one selected from Ni, Co, Mn, Al, B, Y, Zr, Sr, La, Ti, Mg, Zn, Fe, Nb, Ge, W, or Ce.

The spinel phase compound includes the specific components. The spinel phase compound with the specific composition is a more stable structure compared to the inactive spinel material formed during the cycling of the batteries, maintains a certain level of electrochemical activity, and thus can act as a buffer to absorb stress accumulated in the crystal lattice of the cathode material and inhibit crack growth in crystal grains, thereby improving the mechanical performance of the coating layer. Meanwhile, the spinel phase and the fluoride formed on the surface can generate a synergistic effect. The fluorine atoms exhibit a strong electron-attractive property, so that the transition metal atoms in the spinel phase of the sub-surface layer can make charge compensation for the fluoride, forming enhanced "metal-metal" bond energy to improve the interfacial bonding force of the coating layer, thereby further improving the cycling performance of the batteries.

In some embodiments, the coating layer includes a sub-surface layer adjacent to the ternary cathode bulk, and a surface layer away from the ternary cathode bulk. The sub-surface layer substantially includes the spinel phase compound. The surface layer substantially includes the metal fluoride.

The sub-surface layer adjacent to the ternary cathode bulk substantially includes the spinel phase compound. The spinel phase compound can act as a buffer layer to absorb stress accumulated in the crystal lattice of the cathode material and inhibit crack growth in crystal grains.

It can be understood that "away from the ternary cathode bulk" and "adjacent to the ternary cathode bulk" are relative phrases. The sub-surface layer is closer to the ternary cathode bulk than the surface layer.

In some embodiments, the ternary cathode bulk is represented by LiNiₓCo_{y}M_{(1-x-y)}O₂, wherein 0<x<1, 0<y<1, 0<x+y<1, and M represents at least one of Mn, Al, B, Y, Zr, Sr, La, Ti, Mg, Zn, Fe, Nb, Ge, or Ce.

It can be understood that the ternary cathode bulk in the present disclosure can be selected from various types of ternary cathode materials. For example, the ternary cathode bulk can be at least one of LiNi_{1/3}Co_{1/3}Mn_{1/3}O₂ (abbreviated as NCM333), LiNi_{0.5}Co_{0.2}Mn_{0.3}O₂ (abbreviated as NCM523), LiNi_{0.5}Co_{0.25}Mn_{0.25}O₂ (abbreviated as NCM211), LiNi_{0.6}Co_{0.2}Mn_{0.2}O₂ (abbreviated as NCM622), LiNi_{0.8}Co_{0.1}Mn_{0.1}O₂ (abbreviated as NCM811), or a lithium nickel cobalt aluminum oxide such as LiNi_{0.85}Co_{0.15}Al_{0.05}O₂.

In some embodiments, the particle size of the ternary cathode bulk is in a range from 3 µm to 15 µm.

In the present disclosure, the particle size of the ternary cathode precursor can be 4 µm, 5 µm, 6 µm, 7 µm, 8 µm, 9 µm, 10 µm, 11 µm, 12 µm, 13 µm, 15 µm, or 15 µm, or within a range defined by any two of the above values.

Some embodiments of the present disclosure provide a method for preparing the cathode material as described above. The method includes steps S10 to S30:
step S10, mixing a fluorine-containing compound, an oxide, an acidic compound, and a solvent to obtain an etching agent;
step S20, pre-etching by mixing the etching agent with a ternary cathode bulk to obtain a pre-etched mixture material; and
step S30, etching by sintering the pre-etched mixture material to obtain the cathode material.

In the preparation method, the etching agent including the fluorine-containing compound, the oxide, the acidic compound, and the solvent is first prepared. Then, the etching agent is mixed with the ternary cathode bulk for pre-etching to form the pre-etched mixture material, during which the individual components are mixed well, and a weak reaction occurs. The pre-etched mixture material is then sintered for etching. The acidic etching agent induces the material of the surface of the alkaline ternary cathode bulk to have an in-situ reaction. The active metal elements such as transition metal elements of the surface of the ternary cathode bulk react with the fluorine-containing compound at a high temperature to *in situ* form a metal fluoride and a metal oxide. The acidic compound and the solvent in the etching agent can promote the reactivity between the fluoride and the bulk. On the other hand, the oxide plays two roles: 1) capturing excess hydrofluoric acid generated in the etching reaction and thus further repairing the bulk interface; and 2) functioning as a buffer to effectively adjust the acidity of the etching agent and promote the uniformity of the etching reaction. Meanwhile, the surface of the ternary cathode bulk, with a part of active metal elements such as the transition metal elements consumed, can form an electrochemical active spinel phase compound with a more stable structure. The spinel phase compound can act as a buffer layer to absorb stress accumulated in the crystal lattice and inhibit crack growth in crystal grains. More importantly, charge compensation is made between the in-situ induced surface spinel phase and the metal fluoride via the strong electron-attraction property of the fluorine atoms, thereby forming enhanced "metal-metal" bond energy, compositing to form the coating layer with the specific components, and thus preventing the formation of the inactive rock salt phase, the inactive spinel phase, and the other lattice distorted heterogeneous substances from further reactions between the ternary cathode bulk in the cathode material and the electrolyte. The prepared cathode material can inhibit the interface contact reaction between the cathode and the electrolyte, reduce lattice defects due to the dissolution of transition metal elements from the cathode material, decrease the DCR in the cycling, and thus improve the high-temperature storage performance and cycling performance of the batteries.

Compared to the conventional liquid phase impregnation coating, the etching agent induces an *in situ* reaction between the material of the surface of the ternary cathode bulk and the acidic fluorine-containing compound, etc., for *in situ* coating in the preparation method. The formed coating layer exhibits high interface bonding force with the ternary cathode bulk, which improves the mechanical performance and further improves the high-temperature storage performance and cycling performance of the batteries.

In some embodiments, the fluorine-containing compound and/or the oxide includes at least one type of element selected from Ni, Co, Mn, Al, B, Y, Zr, Sr, La, Ti, Mg, Zn, Fe, Nb, Ge, W, or Ce.

In some embodiments, the fluorine-containing compound includes one or more of hydrofluoric acid, ammonium fluoride, nickel fluoride, cobalt fluoride, manganese fluoride, lithium fluoride, zirconium fluoride, yttrium fluoride, aluminum fluoride, titanium fluoride, tungsten fluoride, boron fluoride, strontium fluoride, lanthanum fluoride, magnesium fluoride, or cerium fluoride.

In some embodiments, the oxide includes one or more of aluminum oxide, titanium oxide, magnesium oxide, zirconium oxide, tungsten oxide, strontium oxide, yttrium oxide, boron oxide, lanthanum oxide, cerium oxide, or germanium oxide.

In some embodiments, the acidic compound includes one or more of boric acid, acetic acid, phosphoric acid, hydrofluoric acid, oxalic acid, ethanedioic acid, ammonium dihydrogen phosphate, ammonium hydrogen phosphate, hydrogen sulfide, sulfuric acid, or ammonium tungstate.

In some embodiments, the solvent includes one or more of water, methanol, ethanol, acetone, or ethylene glycol.

In some embodiments, the water can be deionized water or purified water.

In some embodiments, a mass ratio of the ternary cathode bulk, the fluorine-containing compound, and the oxide is 1: (0.005 to 0.5): (0.001 to 0.1).

In some embodiments, a mass ratio of the ternary cathode bulk, the fluorine-containing compound, the oxide, and the acidic compound is 1: (0.005 to 0.5): (0.001 to 0.1): (0.01 to 10).

The thickness and uniformity of the formed coating layer can be controlled by adjusting the mass ratio of the ternary cathode bulk to the fluorine-containing compound.

In some embodiments, the mass ratio of the ternary cathode bulk to the fluorine-containing compound is in a range from 1: 0.005 to 1: 0.5.

In some embodiments, the mass ratio of the ternary cathode bulk to the fluorine-containing compound is in a range from 1: 0.05 to 1: 0.5.

In some embodiments, the mass ratio of the ternary cathode bulk to the fluorine-containing compound is in a range from 1: 0.05 to 1: 0.4.

In some embodiments, the mass ratio of the ternary cathode bulk to the fluorine-containing compound is in a range from 1: 0.05 to 1: 0.2.

In some embodiments, the mass ratio of the ternary cathode bulk to the oxide is in a range from 1: 0.001 to 1: 0.1.

In some embodiments, the mass ratio of the ternary cathode bulk to the oxide is in a range from 1: 0.01 to 1: 0.1.

In some embodiments, the mass ratio of the ternary cathode bulk to the oxide is in a range from 1: 0.01 to 1: 0.05.

In some embodiments, the mass ratio of the ternary cathode bulk to the oxide is in a range from 1: 0.01 to 1: 0.01.

In some embodiments, the mass ratio of the solvent to the ternary cathode bulk is in a range from 0.0001: 1 to 0.01: 1.

In some embodiments, in step S10, the step of obtaining the etching agent includes following steps:
mixing the fluorine-containing compound, the metal oxide, the acidic compound, and the solvent to obtain a mixture;
adjusting a pH value of the mixture to be in a range from 4 to 7 depending on a type or an addition amount of the acidic compound; and
performing drying to obtain the etching agent.

In some embodiments, the acidic compound includes one or more of boric acid, acetic acid, phosphoric acid, hydrofluoric acid, oxalic acid, ethanedioic acid, ammonium dihydrogen phosphate, ammonium hydrogen phosphate, hydrogen sulfide, or sulfuric acid.

In some embodiments, in step S20, the temperature for the pre-etching is in a range from 10°C to 40°C, and the time period for the pre-etching is in a range from 5 minutes to 200 minutes.

The conditions of the pre-etching are adjusted to further promote uniform mixing of individual components.

In some embodiments, after the pre-etching, the step S20 further includes drying the pre-etched mixture material.

In some embodiments, in the present disclosure, the pre-etched mixture material is dried in a rotary evaporator at a temperature of 80°C for 5 hours.

In some embodiments, in step S30, the temperature for the etching is in a range from 40°C to 1000°C, and the time period for the etching is in a range from 5 hours to 30 hours.

In some embodiments, in step S30, the temperature for the etching is in a range from 200°C to 800°C.

In some embodiments, the temperature for the sintering can be 40°C, 50°C, 80°C, 90°C, 100°C, 200°C, 300°C, 400°C, 500°C, 600°C, 700°C, 800°C, 900°C, 1000°C, etc.

In some embodiments, the time period for the sintering can be 5 hours, 10 hours, 15 hours, 20 hours, 25 hours, 30 hours, etc.

In some embodiments, in step S30, the etching is performed in an oxygen-containing atmosphere.

In some embodiments, the oxygen-containing atmosphere can be air or oxygen gas.

The method for preparing the cathode material is a simple process and is easy to carry out for large-scale production.

In the present disclosure, the ternary cathode bulk is prepared as follows.

A nickel salt, a cobalt salt, and an M element-containing salt are dissolved in deionized water, and mixed uniformly to form a salt solution. An alkaline solution is introduced into the salt solution through a peristaltic pump for precipitation under nitrogen atmosphere protection and stirring, during which an ammonia water is introduced to control the pH value of the solution to be in the range from 10.0 to 12.0. After the precipitation, the precipitate is washed with deionized water to obtain a ternary hydroxide precursor. The ternary hydroxide precursor is sintered to form the ternary cathode bulk. The element M includes at least one of Mn, Al, B, Y, Zr, Sr, La, Ti, Mg, Zn, Fe, Nb, Ge, or Ce.

The ternary hydroxide precursor has a chemical formula of Niₓ₁Co_{y1}M(_{1-x1-y1)}(OH)₂, wherein 0<x1<1, 0<y1<1, and 0<x1+y1<1. It can be understood that the added amounts of the nickel salt, the cobalt salt, and the M element-containing salt satisfy the stoichiometric ratio of the elements in the chemical formula of the ternary hydroxide precursor.

The concentration of the salt solution is in a range from 0.1 mol/L to 10mol/L. The concentration of the alkaline solution is in a range from 0.1 mol/L to 10 mol/L. The temperature for the precipitation is in a range from 20°C to 100°C, and the time period for the precipitation is in a range from 0.5 hours to 30 hours.

In some embodiments, the concentrations of the salt solution and the alkaline solution can be each independently selected from 0.1 mol/L, 1 mol/L, 2 mol/L, 3 mol/L, 4 mol/L, 6 mol/L, 8mol/L, or 10mol/L.

In some embodiments, the temperature for the precipitation can be 20°C, 30°C, 40°C, 50°C, 60°C, 70°C, 80°C, 90°C, 95°C, or 100°C, and the time period for the precipitation can be 0.5 hours, 1 hour, 2 hours, 3 hours, 5 hours, 10 hours, 25 hours, 20 hours, 25 hours, 30 hours, etc.

Other point values within the above numerical ranges can be selected and will not be reiterated herein.

In some embodiments, after the sintering, the method further includes jaw crushing and pulverization to form the ternary cathode material with a particle size of 3 µm to 15 µm.

Some embodiments of the present disclosure further provide a positive electrode plate. The positive electrode plate includes a current collector, and a cathode active layer disposed on a surface of the current collector. The cathode active layer includes the cathode material as described above, or the cathode material prepared by the method for preparing a cathode material as described above.

The positive electrode plate can improve the high-temperature storage performance and cycling performance of the batteries.

In some embodiments, the cathode active layer can further include at least one of a binder or a conductive agent.

The conductive agent can include but is not limited to, at least one of graphite, carbon nanotubes, nanofibers, carbon black, or graphene.

In some embodiments, the conductive agent can be at least one selected from SP, KS-6, acetylene black, branched Ketjen black ECP, SFG-6, vapor grown carbon fibers (VGCFs), carbon nanotubes (CNTs), graphene, or a combination thereof.

The binder can include polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile butadiene rubber, styrene-butadiene rubber (SBR), polyacrylic acid (PAA), etc.

The current collector can be, for example, a metal foil or a composite current collector. For example, an aluminum foil can be used as the metal foil

Some embodiments of the present disclosure further provide a battery. The battery includes the cathode material as described above, the cathode material prepared by the method for preparing a cathode material as described above, or the positive electrode plate as described above.

The battery has superior high-temperature storage performance and high cycling performance.

The battery further includes a negative electrode plate and a separator.

The battery further includes an electrolyte. For example, when the battery is a lithium-ion battery, the electrolyte includes a lithium-ion electrolyte salt and a solvent.

As an example, the lithium-ion electrolyte salt is one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(dioxalato)phosphate (LiDFOP), Li(FSO₂)₂N, LiCF₃SO₃, or lithium tetrafluoro(oxalato)phosphate (LiTFOP). The solvent can be selected from fluoroethylene carbonate (FEC), ethylene carbonate (EC), propylene carbonate (PC), ethylmethyl carbonate (EMC), or diethyl carbonate (DEC).

In some embodiments, the battery is a secondary battery.

Another embodiment of the present disclosure provides an electrical device. The electrical device includes the battery as described above.

The electrical device has superior cycling performance and life time.

The electrical device can include but is not limited to, a mobile phone, a laptop computer, an electric vehicle, a ship, a satellite, etc.

The present disclosure will be described below with reference to specific examples. However, the present disclosure is not limited to the examples. It should be understood that the scope of the present disclosure is summarized in the appended claims. Under the guidance of the concept of the present disclosure, those of ordinary skill in the art will appreciate that various modifications to the examples of the present disclosure are within the spirit and scope of the claims of the present disclosure.

### Examples

The parts in the following examples refer to parts by mass.

### Example 1

(1) A ternary cathode bulk (LiNi_{0.6}Co_{0.1}Mn_{0.3}O₂, abbreviated as NCM613) with a particle size of 3 µm to 15 µm was provided.
(2) 14 g of magnesium fluoride, 14 g of aluminium oxide, 28 g of ammonium tungstate, 42g of acetic acid, and 100 g of deionized water were mixed uniformly, during which the pH value of the mixture was adjusted to 4.8 with 0.1 mol/L of acetic acid. The mass ratio of magnesium fluoride, aluminum oxide, ammonium tungstate, and acetic acid was 1:1:2:3. After drying, an etching agent was obtained.
(3) The etching agent obtained in step (2) and 2.8 kg of the ternary cathode bulk were mixed in a mixer at a rotation speed of 300 rpm/min and a temperature of 25°C for 30 minutes to obtain a pre-etched mixture material, in which the ternary cathode bulk, magnesium fluoride, aluminium oxide, ammonium tungstate, and acetic acid have a mass ratio of 1: 0.005: 0.005: 0.01: 0.015.
(4) The pre-etched mixture material was sintered in an air atmosphere at a temperature of 450°C for 12 hours to obtain a cathode material.

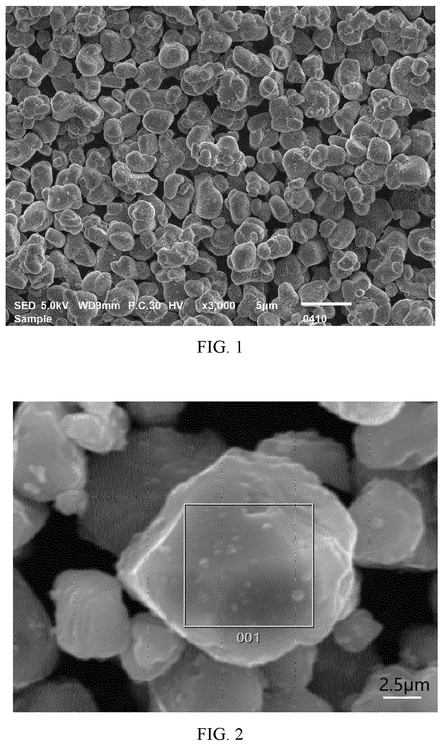

The cathode material was observed using a scanning electron microscope (FEI, quanta200). The SEM image is shown in FIG. 1, from which the coating layer can be clearly visualized.

The coating layer of the prepared cathode material was analyzed using X-ray energy spectroscopy (EDS). The EDS image is shown in FIG. 2. The coating layer contains bulk elements Ni, Co, and Mn, and etching elements Mg, Al, F and W, in which the mass percentages of elements Mg, Al, F and W in the coating layer were respectively 0.1%, 0.15%, 0.23%.

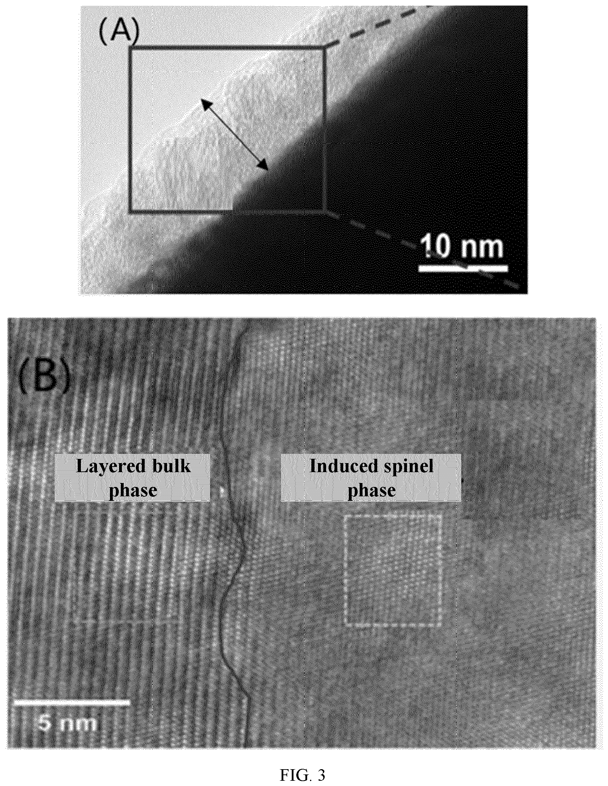

The thickness of the coating layer of the cathode material was tested using the transmission electron microscope (Tecnai G2 F30). The TEM image at magnification of 10 nm is shown in (A) of FIG. 3, in which the thickness of the coating layer is about 18 nm. The TEM image at magnification of 5 nm is shown in (B) of FIG. 3, in which the thickness of the spinel phase compound in the lithium-poor region is 10 nm. The main component of the spinel phase compound is the LiM₂O₄ phase or the M₃O₄ phase, in which the element M is mainly Mn, and is partly Ni, Co or other elements.

(5) A positive electrode plate was prepared using the above prepared cathode material as follows. Appropriate amounts of the cathode materials in the examples and comparative Examples were weighted and assembled into lithium-ion button batteries respectively, in which the mass ratio of the cathode material to the conductive carbon black was 90 wt%: 10wt%, N-methylpyrrolidone (NMP) was used as a solvent, and the materials were dried in a vacuum oven at 80°C for 24 hours to obtain the positive electrode plate with a surface density of 1.2mg/cm².

### (6) Tests:

1. The high-temperature storage performance of the lithium-ion batteries was tested by the method as follows.

The fully charged (4.4V) batteries were stored at a temperature of 60°C for 30 days and 60 days respectively, after which the batteries were disassembled. The positive electrode plate was cleaned with dimethyl carbonate (DMC), and after being dried, the cathode active material layer was scraped off therefrom. The scraped material was dissolved in aqua regia by heating for 30 minutes. The solution was subjected to inductively coupled plasma (ICP) test to determine the amounts of Ni, Co, and Mn therein. The test results are shown in Table 3.

2. The cycling performance of the lithium-ion batteries was tested by the method as follows.

The cathode materials prepared in the examples and comparative examples were tested for cycling performance at 45°C by the method as follows. Appropriate amounts of the cathode materials in the examples and comparative examples were weighed and assembled into lithium-ion button batteries respectively, in which the mass ratio of the cathode material to the conductive carbon black was 90 wt%: 10wt%, N-methylpyrrolidone (NMP) was used as a solvent, and the surface density of the positive electrode plate was 1.2 mg/cm². At a temperature of 25°C and between voltages of 2.8 V and 4.4 V, the batteries were charged and discharged for 1 cycle at a rate of 0.1C/0.1C, and charged and discharged for 1 cycle at a rate of 0.1C/1C for activation. Then, the batteries were charged and discharged for 50 cycles at a rate of 1C/1C and a temperature of 45°C for the cycling performance test. The test results are shown in Table 3 below.

### Examples 2 to 6

Examples 2 to 6 were substantially the same as Example 1, except that the time period for the etching, the temperature for the etching, or the mass ratio of the raw materials in step (2) was different from that in Example 1, so that the thicknesses of the coating layers of the cathode materials were different from that in Example 1.

The other steps were the same as those in Example 1. The parameters and test results are shown in Tables 1 to 3.

### Examples 7 to 10

Examples 7 to 10 were substantially the same as Example 1, except that the types of fluorine-containing compounds and oxides in step (2) were different from those in Example 1.

The other steps were the same as those in Example 1. The parameters and test results are shown in Tables 1 to 3.

### Examples 11 to 13

Examples 11 to 13 were substantially the same as Example 1, except that the type of acidic compounds in step (2) was different from that in Example 1.

The other steps were the same as those in Example 1. The parameters and test results are shown in Tables 1 to 3.

### Comparative Example 1

(1) A ternary cathode bulk (LiNi_{0.6}Co_{0.1}Mn_{0.3}O₂, abbreviated as NCM613) with a particle size of 3 µm to 15 µm was provided.
(2) 14 g of magnesium fluoride and 2.8 kg of the ternary cathode bulk were mixed, and the mixture was sintered for etching under the same etching conditions as those in Example 1.

The other steps were the same as those in Example 1. The parameters and test results are shown in Tables 1 to 3.

### Comparative Example 2

(1) A ternary cathode bulk (LiNi_{0.6}Co_{0.1}Mn_{0.3}O₂, abbreviated as NCM613) with a particle size of 3 µm to 15 µm was provided.
(2) 14 g of aluminum oxide and 2.8 kg of the ternary cathode bulk were mixed, and the mixture was sintered for etching under the same etching conditions as those in Example 1.

The other steps were the same as those in Example 1. The parameters and test results are shown in Tables 1 to 3.

### Comparative Example 3

(1) A ternary cathode bulk (LiNi_{0.6}Co_{0.1}Mn_{0.3}O₂, abbreviated as NCM613) with a particle size of 3 µm to 15 µm was provided.
(2) 14 g of magnesium fluoride, 14 g of aluminum oxide, and deionized water were mixed and dried. Then, the mixture and 2.8 kg of the ternary cathode bulk were mixed, and sintered for etching under the same etching conditions as those in Example 1.

The other steps were the same as those in Example 1. The parameters and test results are shown in Tables 1 to 3.

### Comparative Example 4

(1) A ternary cathode bulk (LiNi_{0.6}Co_{0.1}Mn_{0.3}O₂, abbreviated as NCM613) with a particle size of 3 µm to 15 µm was provided.
(2) 2.5 kg of the ternary cathode bulk and 14 g of the spinel phase compound LiNi_{0.5}Mn_{1.5}O₄ were mixed, and the mixture was sintered for etching under the same etching conditions as those in Example 1.

The other steps were the same as those in Example 1. The parameters and test results are shown in Tables 1 to 3.

### Comparative Example 5

The ternary cathode bulk was not subjected to surface coating. The other steps were the same as those in Example 1. The parameters and test results are shown in Tables 1 to 3.

The parameters and test results of the examples and comparative examples are shown in Tables 1 to 3. The mass ratio of the ternary cathode bulk to the fluorine-containing compound is represented by m1:m2. M is mainly Mn, and is partly Ni and Co. The bulk refers to the ternary cathode bulk.

**Table 1 Composition and thickness of coating layer**

| | Components of coating layer | | | Thickn ess of coating layer (nm) | Structural formula of coating layer |
|---|---|---|---|---|---|
| | Structural formula of spinel phase compound | Oxide | Fluorine-contain ing compound | | |
| Example 1 | LiNi_{0.5}Mn_{1.5}O₄ | Al₂O₃ | NiF₂& MgF₂ &AlF₃&WF₆ | 18 | LiNi_{0.17}Mn_{0.33}Al_{0.15}Mg_{0.14}W_{0.05}O_{1.70}F_{0.30} |
| Example 2 | LiNi_{0.5}Mn_{1.5}O₄ | Al₂O₃ | NiF₂& MgF₂ &AlF₃&WF₆ | 10 | LiNi_{0.18}Mn_{0.34}Al_{0.15}Mg_{0.14}W_{0.05}O_{1.75}F_{0.25} |
| Example 3 | LiNi_{0.5}Mn_{1.5}O₄ | Al₂O₃ | NiF₂&MgF₂ &AlF₃&WF₆ | 25 | LiNi_{0.17}Mn_{0.33}Al_{0.15}Mg_{0.16}W_{0.04}O_{1.66}F_{0.34} |
| Example 4 | LiNi_{0.5}Mn_{1.5}O₄ | Al₂O₃ | NiF₂&MgF₂ &AlF₃&WF₆ | 95 | LiNi_{0.15}Mn_{0.31}Al_{0.15}Mg_{0.15}W_{0.04}O_{1.61}F_{0.39} |
| Example 5 | LiNi_{0.5}Mn_{1.5}O₄ | Al₂O₃ | NiF₂&MgF₂ &AlF₃&WF₆ | 146 | LiNi_{0.15}Mn_{0.31}Al_{0.15}Mg_{0.15}W_{0.05}O_{1.60}F_{0.40} |
| Example 6 | LiNi_{0.5}Mn_{1.5}O₄ | Al₂O₃ | NiF₂&MgF₂ &AlF₃&WF₆ | 180 | LiNi_{0.15}Mn_{0.31}Al_{0.14}Mg_{0.14}W_{0.05}O_{1.56}F_{0.44} |
| Example 7 | LiNi_{0.5}Mn_{1.5}O₄ | La₂O₃ | NiF₂&AlF₃ &LaF₃&WF₆ | 12 | LiNi_{0.17}Mn_{0.33}La_{0.15}Al_{0.13}W_{0.05}O_{1.67}F_{0.33} |
| Example 8 | LiNi_{0.5}Mn_{1.5}O₄ | La₂O₃ | ZrF₂ &LaF₃&WF₆ | 13 | LiNi_{0.17}Mn_{0.33}La_{0.15}Zr_{0.12}W_{0.03}O_{1.7}F_{0.3} |
| Example 9 | LiNi_{0.5}Mn_{1.5}O₄ | Y₂O₃ | NiF₂&MgF₂ &YF₃&WF₆ | 11 | LiNi_{0.18}Mn_{0.34}Y_{0.15}Mg_{0.15}W_{0.04}O_{1.70}F_{0.30} |
| Example 10 | LiNi_{0.5}Mn_{1.5}O₄ | Ce₂O ₃ | NiF₂&MgF₂ &CeF₃ &WF₆ | 11 | LiNi_{0.18}Mn_{0.34}Ce_{0.15}Mg_{0.14}W_{0.04}O_{1.69}F_{0.31} |
| Example 11 | LiNi_{0.5}Mn_{1.5}O₄ | Al₂O₃ | NiF₂&AlF₃ &TiF₃&WF₆ | 12 | LiNi_{0.18}Mn_{0.34}Al_{0.12} Ti_{0.11}W_{0.04}O_{1.7}F_{0.30} |
| Example 12 | LiNi_{0.5}Mn_{1.5}O₄ | Ce₂O ₃ | MgF₂& AlF₃&WF₆ | 11 | LiNi_{0.18}Mn_{0.34}Ce_{0.15}Mg_{0.14}W_{0.04}O_{1.70}F_{0.30} |
| Example 13 | LiNi_{0.5}Mn_{1.5}O₄ | Ce₂O ₃ | MgF₂& AlF₃&WF₆ | 12 | LiNi_{0.18}Mn_{0.34}Ce_{0.15}Mg_{0.14}W_{0.04}O_{1.70}F_{0.30} |
| Comparative Example 1 | / | / | MgF₂ | 10 | MgF₂ |
| Comparative Example 2 | / | Al₂O₃ | / | 10 | LiAlO₂ |
| Comparative Example 3 | / | Al₂O₃ | MgF₂ | 10 | LiAl_{0.33}Mg_{0.5}OF |
| Comparative Example 4 | LiNi_{0.5}Mn_{1.5}O₄ | / | / | 10 | LiNi_{0.5}Mn_{1.5}O₄ |
| Comparative Example 5 | / | / | / | / | / |

| | | | | | |
|---|---|---|---|---|---|
| "/" indicates that the step was not performed or the structure does not exist. | | | | | |

**Table 2 Preparation process of cathode material**

| | Preparation process | | |
|---|---|---|---|
| | Temperature of etching (°C) | Time period of etching (min) | Mass ratio of bulk/fluoride/oxide/acidic compound |
| Example 1 | 450°C | 12h | mass ratio of bulk/MgF₂/Al₂O₃/ammonium tungstate/acetic acid=1:0.005:0.005:0.005:0.01:0.015 |
| Example 2 | 450°C | 6h | mass ratio of bulk/MgF₂/Al₂O₃/ammonium tungstate/acetic acid=1:0.005:0.005:0.005:0.01:0.015 |
| Example 3 | 650°C | 12h | mass ratio of bulk/MgF₂/Al₂O₃/ammonium tungstate/acetic acid=1:0.005:0.005:0.005:0.01:0.015 |
| Example 4 | 450°C | 12h | mass ratio of bulk/MgF₂/Al₂O₃/ammonium tungstate/acetic acid=1:0.01:0.001:0.005:0.01:0.03 |
| Example 5 | 450°C | 12h | mass ratio of bulk/MgF₂/Al₂O₃/ammonium tungstate/acetic acid=1:0.02:0.02:0.005:0.01:0.03 |
| Example 6 | 450°C | 12h | mass ratio of bulk/MgF₂/Al₂O₃/ammonium tungstate/acetic acid=1:0.05:0.05:0.005:0.01:0.15 |
| Example 7 | 450°C | 12h | mass ratio of bulk/AlF₃/La₂O₃/ammonium tungstate/acetic acid=1:0.005:0.005:0.01:0.015 |
| Example 8 | 450°C | 12h | mass ratio of bulk/ZrF₂/La₂O₃/ammonium tungstate/acetic acid=1:0.005:0.005:0.01:0.015 |
| Example 9 | 450°C | 12h | mass ratio of bulk/MgF₂/Y₂O₃/ammonium tungstate/acetic acid=1:0.005:0.005:0.01:0.015 |
| Example 10 | 450°C | 12h | mass ratio of bulk/MgF₂/Ce₂O₃/ammonium tungstate/acetic acid=1:0.005:0.005:0.01:0.015 |
| Example 11 | 450°C | 12h | mass ratio of bulk/TiF₃/Al₂O₃/H₂SO₄ =1:0.005:0.005:0.001 |
| Example 12 | 450°C | 12h | mass ratio of bulk/MgF₂/Ce₂O₃/H₃PO₄=1:0.005:0.005:0.001 |
| Example 13 | 450°C | 12h | mass ratio of bulk/MgF₂/Ce₂O₃/ammonium sulfate/ethanedioic acid=1:0.005:0.005: 0.01:0.015 |
| Comparative Example 1 | 450°C | 12h | mass ratio of bulk/MgF₂=1:0.005 |
| Comparative Example 2 | 450°C | 12h | mass ratio of bulk/Al₂O₃=1:0.005 |
| Comparative Example 3 | 450°C | 12h | mass ratio of bulk/MgF₂/Al₂O₃=1:0.005:0.005 |
| Comparative Example 4 | 450°C | 12h | mass ratio of bulk LiNi_{0.5}M_{1.5}O₄=1:0.005 |
| Comparative Example 5 | / | / | / |

| | | | |
|---|---|---|---|
| "/" indicates that the step was not performed or the structure does not exist. | | | |

The performance test results of the examples and comparative examples are shown in Table 3.

**Table 3**

| | Discharge capacity/(mAh/g) | Efficiency/% | Capacity retention rate at 50th cycle (%) @45°C/% | After 60-day storage at 4.4V, 60°C, total dissolved amount of Ni, Co, and Mn (ppm) |
|---|---|---|---|---|
| Example 1 | 194.5 | 89.61 | 97.52 | 1121 |
| Example 2 | 194.2 | 89.64 | 97.01 | 1355 |
| Example 3 | 193.6 | 89.38 | 96.46 | 1087 |
| Example 4 | 193.3 | 89.55 | 95.81 | 976 |
| Example 5 | 193.0 | 89.48 | 95.15 | 698 |
| Example 6 | 192.3 | 89.35 | 94.28 | 512 |
| Example 7 | 194.2 | 89.59 | 97.54 | 1137 |
| Example 8 | 194.0 | 89.55 | 97.28 | 1208 |
| Example 9 | 193.9 | 89.57 | 97.33 | 1256 |
| Example 10 | 194.7 | 89.61 | 97.38 | 1238 |
| Example 11 | 194.2 | 89.52 | 97.30 | 1204 |
| Example 12 | 194.1 | 89.57 | 97.33 | 1301 |
| Example 13 | 194.3 | 89.51 | 97.43 | 1198 |
| Comparative Example 1 | 194.5 | 89.61 | 91.81 | 5984 |
| Comparative Example 2 | 194.5 | 89.61 | 92.18 | 5021 |
| Comparative Example 3 | 193.1 | 89.61 | 92.68 | 4199 |
| Comparative Example 4 | 192.1 | 89.25 | 92.32 | 4809 |
| Comparative Example 5 | 189.1 | 89.11 | 89.02 | 17230 |

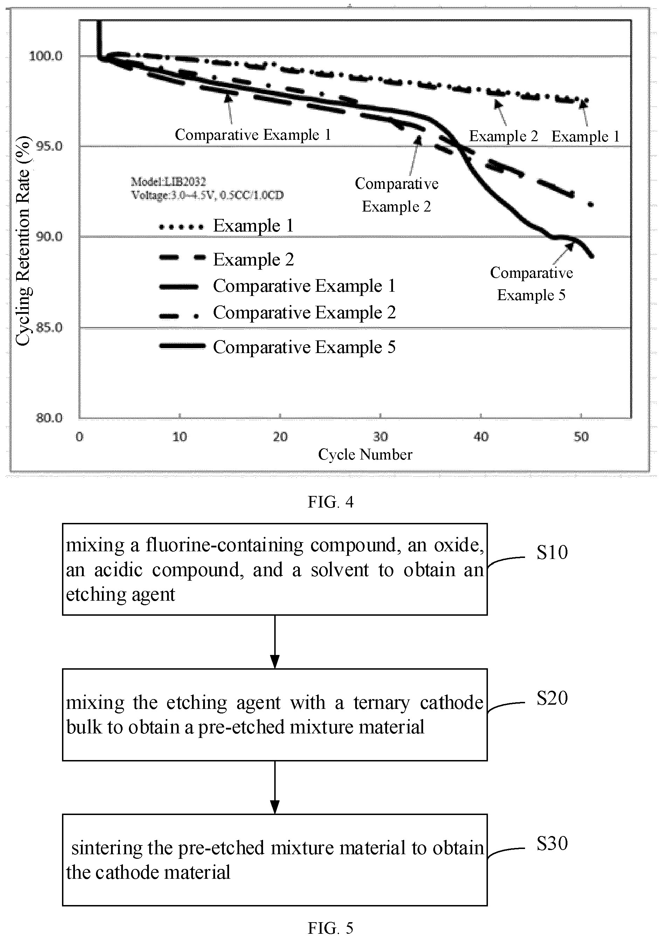

The cycling performances at 45°C of the batteries prepared in Example 1, Example 2, Comparative Example 1, Comparative Example 2 and Comparative Example 5 are compared in FIG. 4.

From analysis of the results in Tables 1 to 3, it can be seen that the cathode material of the present disclosure, when applied in preparation of batteries, is capable of inhibiting the contact reaction between the cathode and the electrolyte, reducing the lattice defects due to the dissolution of transition metals in the cathode material, and thus improving the high-temperature storage performance and cycling performance of the batteries.

The various technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A cathode material, comprising a ternary cathode bulk and a coating layer disposed on a surface of the ternary cathode bulk;
the coating layer comprises a component represented by LiXₐO_{(2-b)}F_{b}, wherein X represents at least one of Ni, Co, Mn, Al, B, Y, Zr, Sr, La, Ti, Mg, Zn, Fe, Nb, Ge, W, or Ce;
0<a<6, 0<b≤1.

2. The cathode material according to claim 1, wherein a thickness of the coating layer is in a range from 5 nm to 200 nm.

3. The cathode material according to claim 1, wherein the coating layer comprises a composite of a metal fluoride, a metal oxide, and a spinel phase compound, and
the metal fluoride, the metal oxide, and the spinel phase compound satisfy one or more conditions selected from the group consisting of:
a metal element in the metal fluoride comprises at least one of Ni, Co, Mn, Al, B, Y, Zr, Sr, La, Ti, Mg, Zn, Fe, Nb, Ge, W, or Ce;
the metal fluoride is represented by Tₐ₁F, wherein T represents at least one of Ni, Co, Mn, Al, B, Y, Zr, Sr, La, Ti, Mg, Zn, Fe, Nb, Ge, W, or Ce, and 0<a1≤1;
a metal element in the metal oxide comprises at least one of Ni, Co, Mn, Al, B, Y, Zr, Sr, La, Ti, Mg, Zn, Fe, Nb, Ge, W, or Ce;
the metal oxide is represented by L_{b1}O, wherein L represents at least one of Ni, Co, Mn, Al, B, Y, Zr, Sr, La, Ti, Mg, Zn, Fe, Nb, Ge, W, or Ce, and 0<b1≤2; and
the spinel phase compound is represented by LiX1_{c1}Q1_{d1}O₄, wherein 0≤c1≤1, 0≤d1≤2; if c1 is 0, d1 is not 0, and if d1 is 0, c1 is not 0; Q1 and X1 are each independently at least one selected from Ni, Co, Mn, Al, B, Y, Zr, Sr, La, Ti, Mg, Zn, Fe, Nb, Ge, W, or Ce.

4. The cathode material according to claim 3, wherein the coating layer comprises a sub-surface layer adjacent to the ternary cathode bulk and a surface layer away from the ternary cathode bulk, and
the sub-surface layer substantially comprises the spinel phase compound, and the surface layer substantially comprises the metal fluoride.

5. The cathode material according to any one of claims 1 to 4, wherein the ternary cathode bulk satisfies one or more conditions selected from the group consisting of:
the ternary cathode bulk is represented by LiNiₓCo_{y}M_{(1-x-y)}O₂, wherein 0<x<1, 0<y<1, 0<x+y<1, M represents at least one of Mn, Al, B, Y, Zr, Sr, La, Ti, Mg, Zn, Fe, Nb, Ge, or Ce; and
a particle size of the ternary cathode bulk is in a range from 3 µm to 15 µm.

6. A method for preparing a cathode material according to any one of claims 1 to 5, comprising:
(1) mixing a fluorine-containing compound, an oxide, an acidic compound, and a solvent to obtain an etching agent;
(2) pre-etching by mixing the etching agent with a ternary cathode bulk to obtain a pre-etched mixture material; and
(3) etching by sintering the pre-etched mixture material to obtain the cathode material.

7. The method according to claim 6, wherein the fluorine-containing compound comprises one or more of hydrofluoric acid, ammonium fluoride, nickel fluoride, cobalt fluoride, manganese fluoride, lithium fluoride, zirconium fluoride, yttrium fluoride, aluminum fluoride, titanium fluoride, tungsten fluoride, boron fluoride, strontium fluoride, lanthanum fluoride, magnesium fluoride, or cerium fluoride;
the oxide comprises one or more of aluminum oxide, titanium oxide, magnesium oxide, zirconium oxide, tungsten oxide, strontium oxide, yttrium oxide, boron oxide, lanthanum oxide, cerium oxide, or germanium oxide;
the acidic compound comprises one or more of boric acid, acetic acid, phosphoric acid, hydrofluoric acid, oxalic acid, ethanedioic acid, ammonium dihydrogen phosphate, ammonium hydrogen phosphate, hydrogen sulfide, sulfuric acid, or ammonium tungstate; and
the solvent comprises one or more of water, methanol, ethanol, acetone, or ethylene glycol.

8. The method according to claim 6 or 7, wherein a mass ratio of the ternary cathode bulk, the fluorine-containing compound, the oxide, and the acidic compound is 1: (0.005 to 0.5): (0.001 to 0. 1): (0.01 to 10).

9. The method according to claim 6 or 7, wherein the method is performed under the following conditions:
a time period for the pre-etching is in a range from 5 minutes to 200 minutes;
a temperature for the pre-etching is in a range from 10°C to 40°C;
a time period for the etching is in a range from 5 hours to 30 hours;
a temperature for the etching is in a range from 40°C to 1000°C; and
the etching is performed in an oxygen-containing atmosphere.

10. The method according to claim 6 or 7, wherein the step of obtaining the etching agent comprises:
mixing the fluorine-containing compound, the metal oxide, the acidic compound, and the solvent to obtain a mixture;
adjusting a pH value of the mixture to be in a range from 4 to 7 depending on a type or an addition amount of the acidic compound; and
performing drying to obtain the etching agent.

11. A positive electrode plate, comprising a current collector, and a cathode active layer disposed on a surface of the current collector,
wherein the cathode active layer comprises the cathode material according to any one of claims 1 to 5, or the cathode material prepared by the method according to any one of claims 6 to 10.

12. A battery, comprising the cathode material according to any one of claims 1 to 5, the cathode material prepared by the method according to any one of claims 6 to 10, or the positive electrode plate according to claim 11.

13. An electrical device, comprising the battery according to claim 12.
